(19) Europäisches Patentamt
European Patent Office
Office européen des brevets

(11) EP 3 287 388 A1

(12) **EUROPEAN PATENT APPLICATION**
published in accordance with Art. 153(4) EPC

(43) Date of publication:
28.02.2018 Bulletin 2018/09

(51) Int Cl.:
*B65D 65/42* (2006.01)          *B32B 3/30* (2006.01)
*B65D 85/72* (2006.01)          *C08J 7/04* (2006.01)

(21) Application number: 16782906.8

(22) Date of filing: 18.03.2016

(86) International application number:
PCT/JP2016/058740

(87) International publication number:
WO 2016/170884 (27.10.2016 Gazette 2016/43)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 24.04.2015  JP 2015089465

(71) Applicants:
• Toyo Seikan Co., Ltd.
Tokyo 141-8640 (JP)
• Toyo Seikan Group Holdings, Ltd.
Shinagawa-ku
Tokyo 141-8627 (JP)

(72) Inventors:
• NYUU, Keisuke
Yokohama-shi
Kanagawa 230-0001 (JP)

• OKADA, Yoshiaki
Yokohama-shi
Kanagawa 230-0001 (JP)
• MIYAZAKI, Tomoyuki
Yokohama-shi
Kanagawa 230-0001 (JP)
• AKUTSU, Yosuke
Yokohama-shi
Kanagawa 240-0062 (JP)
• IWAMOTO, Shinya
Yokohama-shi
Kanagawa 240-0062 (JP)

(74) Representative: J A Kemp
14 South Square
Gray's Inn
London WC1R 5JJ (GB)

(54) **STRUCTURE HAVING EXTERNALLY ADDED REGION ON SURFACE**

(57)    A structure including a formed body 1 formed in a predetermined shape and an externally added region formed on the surface of the formed body 1, wherein the externally added region has externally added protuberances 3 of a mixture of a wax component and a liquid 5 formed on the surface of the formed body 1 and, further, has a mountain/valley surface formed by the distribution of the externally added protuberances 3; and on the externally added region, the surfaces (valley portions) of the formed body 1 are covered with the liquid 5 at portions among the externally added protuberances 3.

EP 3 287 388 A1

# Fig. 1

**Description**

Technical Field:

This invention relates to a structure having externally added regions on the surfaces thereof. More specifically, the invention relates to a structure having, on the surfaces thereof, mountains and valleys formed by the externally added protuberances that are formed by being externally added, and, particularly, to a structure that is favorably used as a container.

Background Art:

The containers for containing liquid contents must be capable of favorably discharging the contents irrespective of the materials forming the containers. Discharging the content is not almost of a problem when the liquids having low viscosities such as water and the like are contained. Discharging the content, however, becomes a serious problem when the content is a highly viscous substance irrespective of the plastic container or the glass container. Namely, the contents of this kind are not quickly discharged despite the container is tilted. Besides, the contents tend to stay on the container wall and cannot be all recovered. Particularly, the content stays in considerable amounts on the bottom of the container and is not all recovered.

In the field of containers, in particular, foods as represented by ketchup and mayonnaise are the water-containing products. Therefore, it has been desired to further improve the slipping property (sliding property) for the viscous water-containing products. Specifically, it is difficult to realize a greatly improved slipping property for the emulsified products such as mayonnaise and the like. Therefore, it has been strongly demanded to improve the slipping property for the viscous emulsified products.

In recent years, it has been known to improve the slipping property to viscous substances by forming an oil film on the surfaces of the formed bodies such as containers and the like. According to this technology, the slipping property can be strikingly improved as compared to the cases of adding an additive such as lubricant to the synthetic resin that forms the surfaces of the formed bodies, and attention has now been paid thereto.

Concerning the technology for improving the slipping property to the contents by forming the oil film on the surfaces, some proposals have been made such as roughening the underlying surface of the oil film to a suitable extent and decreasing the thickness of the oil film. This technology has already been patented (patent document 1).

Among various technologies for imparting the slipping property by forming the oil film on the surfaces, the above-mentioned technology is effective in improving the slipping property to a considerable degree. However, the rough surface that lies under the oil film must be formed by using a resin and, besides, the resin layer forming the rough surface must be blended with fine solid particles that work as a roughening agent. That is, the rough surface of a predetermined roughness is formed relying on the granular roughening agent contained in the underlying resin layer involving difficulty in controlling the surface roughness and in the production. Besides, there exists a limitation that the underlying surface must be formed by using a resin.

Further, the present applicant has previously proposed a structure forming, on the surface thereof, a roughened portion having a maximum roughness Rz in a range of 0.5 to 5.0 $\mu$m and forming, on the roughened portion, a thin liquid film of a thickness of about 0.1 to about 3.4 $\mu$m (Japanese Patent Application No. 2014-91894).

Upon selecting the kind of the liquid that forms the liquid film, the surface of the structure exhibits excellent slipping property to various viscous substances. The structure, therefore, can be used as a container. A great advantage of this technology resides in that the roughened surface lying under the liquid film can be formed by externally adding solid particles to the surface of the structure and, therefore, the roughness of the surface can be easily controlled depending on the size and amount of the solid particles that are used.

This technology, however, is accompanied by a problem in that the slipping effect realized by the liquid film is subject to decrease with the passage of time, and improvements are necessary.

The present applicant has, further, proposed a packing material having a liquid film formed on the inner surface of the container that comes in contact with the content, the liquid film being dispersed with solid particles of a grain size of not more than 300 $\mu$m (Japanese Patent Application No. 2014-126877).

In the above technology, however, quite no study has been made about sustaining the slipping property.

Prior Art Document:

Patent Document:

Patent document 1: Japanese Patent No. 5673870

Outline of the Invention:

Problems that the Invention is to Solve:

It is, therefore, an object of the present invention to provide a structure having, on the surfaces thereof, externally added regions exhibiting excellent slipping property to viscous water-containing substances and sustaining the property and, specifically, to provide a structure that can be favorably used as a container.

Another object of the present invention is to provide a structure having such surface properties as to exhibit excellent slipping property to viscous water-containing substances and sustaining the property by utilizing the externally added region that is formed by being externally added and in which the externally added protuberances are distributed.

Means for Solving the Problems:

The present inventors have forwarded the study concerning the surface properties of when protuberances are formed by being externally added to the surfaces of the formed bodies such as containers. As a result, the inventors have discovered that the surface exhibits excellent slipping property to viscous water-containing substances and, at the same time, sustains the slipping property when the externally added protuberances are distributed therein maintaining a height in excess of a certain degree, when the externally added protuberances are formed of a mixture of a wax component and an oily liquid, and when the gaps among the externally added protuberances are covered with the oily liquid, and have thus completed the invention.

According to the present invention, there is provided a structure including a formed body formed in a predetermined shape and an externally added region formed on a surface of the formed body, wherein:

the externally added region has externally added protuberances of a mixture of a wax component and a liquid formed on the surface of the formed body and, further, has a mountain/valley surface formed by the distribution of the externally added protuberances; and

on the externally added region, the surfaces of the formed body are covered with the liquid at portions among the externally added protuberances.

In this specification, the formed body stands for the one of which the surface has not been subjected to the treatment of external addition, and the structure stands for the one comprising the formed body of which the surface is subjected to the treatment of external addition and on which surface an externally added region is formed, the externally added protuberances being distributed therein.

In the structure of the present invention, it is desired that:

(1) A difference h of elevation is at least not less than 10 $\mu$m between the mountain portion and the valley portion on the mountain/valley surface in the externally added region;

(2) In an observation of the surface by using a microscope, a ratio F of mountain portions defined by the following formula:

$$F = F_1/F_0$$

wherein $F_0$ is a measured area, and $F_1$ is a sum of the projected areas occupied by the mountain portions having projected areas of not less than 1000 $\mu$m$^2$ in the measured area $F_0$,

is 0.5 to 0.9;

(3) The wax component has a melting point of not lower than 50°C;

(4) The liquid is an oily liquid;

(5) The oily liquid acquires an angle of contact (23°C) of not more than 45° relative to the surface of the formed body and has a viscosity (25°C) of not more than 100 mPa·s;

(6) The externally added protuberances as well as the surfaces of the formed body among the externally added protuberances are coated with said liquid used for forming the externally added protuberances;

(7) On the externally added region, the liquid is present in an amount of 1,000 to 5,000 parts by mass per 100 parts by mass of the wax component;

(8) The surface of the formed body lying under the externally added region is formed of a synthetic resin or a glass;

(9) The formed body is a container, and the externally added region is forming a inner surface of the container to which a content contained therein comes in contact; and

(10) The container is used for containing a fluid content that has a viscosity (25°C) of not less than 200 mPa·s.

Effects of the Invention:

The surface structure specific to the structure of the present invention is formed by externally adding a mixture of a wax component and a liquid to the surface of the formed body. That is, the surface structure is not the one that is formed by internally adding the solid particles into the resin layer that forms the surface of the formed body. Therefore, it is allowed to easily and reliably control the surface state (degree of ruggedness due to the solid particles and distribution thereof) depending on the melting point of the wax component and the amount of use thereof.

Besides, due to its specific surface structure, the structure of the present invention exhibits excellent slipping property not only to viscous water-containing substances but also to emulsified products such as mayonnaise-like foods, and yet sustains the slipping property.

Therefore, when used as a container for containing, specifically, viscous water-containing substances like ketchup, sauce and mayonnaise-like foods having a viscosity (25°C) of not less than 200 mPa·s, the structure of the invention makes it possible to quickly discharge the contents, permits the contents to stay very little in the container, and enables the contents to be used in almost all amount.

Brief Description of the Drawings:

[Fig. 1] It is a schematic side sectional view illustrating the surface state of a structure of the present invention.
[Fig. 2] It is a view showing the state of a directly blow-formed bottle which is a preferred embodiment of the structure of the present invention.
[Fig. 3] It is a view showing the three-dimensional surface structure of when the surface of the structure of Example 1 is observed by using a digital microscope and in which portions appearing in black are mountain portions.

Modes for Carrying Out the Invention:

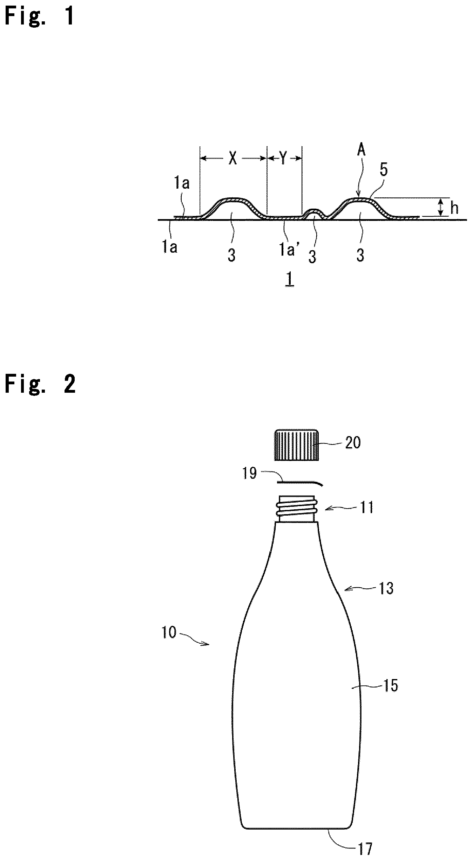

Referring to Fig. 1, the structure of the present invention is formed by providing an externally added region in which externally added protuberances 3 are distributed on the surface (underlying surface 1a) of a formed body 1 that is formed in a shape to meet the use. Upon forming the externally added protuberances 3, there are formed mountain portions X and valley portions Y on the surface of the formed body 1.

The externally added portions 3 are formed of a mixture of a wax component and a liquid 5, and are held in the underlying surface 1a to constitute the mountain portions X. The externally added protuberances 3 are covered with the liquid 5. Here, at the same time, the underlying surface 1a', too, of the formed body 1 is covered with the liquid 5 at the valley portions X where no externally added protuberance 3 is formed.

<Principle of expressing slipping property>

In the externally added region (e.g., inner surface of the container) of the structure, there are formed, in Fig. 1, three mountain portions X due to the externally added protuberances 3 of the mixture of the wax component and the liquid 5. Moreover, the underlying surface 1a', too, is covered with the liquid 5 at the valley portions Y among the mountain portions X (externally added protuberances 3).

The externally added protuberances 3 are formed of a mixture of the wax component and the liquid 5, and, therefore, assume a semisolid state or a gel-like state, and are stably held on the underlying layer 1a.

The viscous water-containing substance moves on the surface that is forming the mountain portions X and the valley portions Y; i.e., the water-containing substance moves while coming in contact with the liquid 5. Here, however, the externally added protuberances 3 are assuming the state of semisolid or gel of the wax and the liquid 5. Therefore, the viscous water-containing substance moves producing a very small frictional force relative to the externally added protuberances 3 and hence exhibiting excellent slipping property. Further, since only a small frictional force is produced by the movement of the viscous water-containing substance, no large load is exerted on the externally added protuberances 3 and, therefore, almost no stress is exerted on the interface between the underlying layer 1a and the externally added protuberances 3. As a result, the externally added protuberances 3 do not move on the underlying surface 1a but are held thereon stably.

It can be considered that the viscous water-containing substance, depending on its kind, moves while coming in contact not only with the mountain portions X where the externally added protuberances 3 are formed but also with the valley portions Y where no externally added protuberance 3 is formed. Here, however, the underlying surface 1a' of the valley portions Y, too, is covered with the liquid 5 effectively avoiding a decrease in the slipping property.

In the present invention, further, the externally added protuberances 3 are covered with the liquid 5 in addition to being formed of the wax component and the liquid 5. Therefore, despite the viscous water-containing substance flows repetitively and the thickness of the liquid 5 decreases, the liquid 5 is replenished from the interior of the externally added protuberances 3. In the present invention, therefore, the above-mentioned excellent slipping property is sustained and does not decrease despite the time passes by.

The mechanism for expressing the slipping property of the structure of the present invention described above may resemble the one disclosed in the patent document 1 that was patented already, but is clearly different therefrom.

In the patent document 1, the surface is formed rugged due to the solid particles internally added into the resin layer that forms the surface, and an oil film of a very small thickness is formed thereon such that the ruggedness is reflected on the surface of the oil film. Namely, the slipping property is expressed by the oil film having such a rugged surface. At a glance, it may appear that the slipping property is expressed by the mechanism which is the same as that of the present invention. According to the patent document 1, however, the ruggedness (protuberance) is formed by the solid particles internally added to the resin layer, and the height of the ruggedness (protuberance) is very small. That is, the patent document 1 is not utilizing the air layer present among the protuberances for expressing the slipping property but is rather attempting to decrease the area of contact between the substance flowing on the surface and the surface of the structure by forming the surface rugged. The patent document 1 is thus lowering the frictional force for the substance that flows on the surface to thereby improve the slipping property.

In the present invention, on the other hand, the externally added protuberances 3 are formed by using a mixture of a wax component and a liquid 5, and are assuming a semisolid or gel-like form, and have their surfaces covered with the liquid 5. That is, in the present invention, a decreased frictional force is exerted on the externally added protuberances 3 and, therefore, excellent slipping property is exhibited.

In the patent document 1, the liquid film has fine protuberances on the surface thereof while in the present invention as will be demonstrated in Examples appearing later, the surface assumes the shape of mountains and valleys having a difference h of elevation with a mild undulation. From the difference in the surface shape, too, therefore, it can be presumed that the slipping property is exhibited based on a different mechanism.

<Formed body 1>

There is no particular limitation on the material of the formed body 1 that is used for forming the structure of the present invention so far as it is capable of holding the externally added protuberances 3 on the surface (underlying surface 1a) thereof. Namely, the formed body 1 may be made of a resin, a glass or a metal and may be formed in any shape to meet the use.

The externally added protuberances 3 formed by using the wax component and the liquid 5 exhibit the highest effect for sustaining the properties particularly when the underlying surface 1a is formed of a synthetic resin. The effect is sustained to some extent even when the underlying surface 1a is formed of a glass or a metal. Therefore, the present invention can be applied even to a formed body 1 having the underlying surface 1a formed by using these materials, which is a great advantage of the invention.

In the invention, the construction formed on the surface of the formed body 1 exhibits excellent slipping property to viscous water-containing substances. It is, therefore, desired that the formed body 1 has the shape of a pipe for flowing the water-containing substances, a container for containing them, and a container lid. The externally added protuberances 3 are formed on the surface that comes in contact with the water-containing substances.

In the invention as described above, the externally added protuberances 3 are formed by using the wax component and the liquid 5. From this point of view, therefore, the surface (underlying surface 1a) of the formed body 1 is most desirably formed by using a synthetic resin (hereinafter underlying resin) such as any thermoplastic resin or thermosetting resin that can be formed.

Generally, however, it is desired to use a thermoplastic resin since it can be easily formed, has a high degree of affinity to the oily liquid 5, and is capable of holding the externally added protuberances 3 more stably.

As the thermoplastic resin, there can be exemplified the following resins; i.e., olefin resins such as low-density polyethylene, high-density polyethylene, polypropylene, poly 1-butene, poly 4-methyl-1-pentene, and random or block copolymers of $\alpha$-olefins such as ethylene, propylene, 1-butene or 4-methyl-1-pentene, and cyclic olefin copolymers thereof;

ethylene-vinyl copolymers such as ethylene-vinyl acetate copolymer, ethylene-vinyl alcohol copolymer and ethylene-vinyl chloride copolymer;

styrene resins such as polystyrene, acrylonitrile-styrene copolymer, ABS and $\alpha$-methylstyrene· styrene copolymer;

vinyl resins such as polyvinyl chloride, polyvinylidene chloride, vinyl chloride-vinylidene chloride copolymer, methyl polyacrylate and methyl polymethacrylate;

polyamide resins such as nylon 6, nylon 6-6, nylon 6-10, nylon 11 and nylon 12;

polyester resins such as polyethylene terephthalate (PET), polybutylene terephthalate, polyethylene naphthalate and copolymerized polyesters thereof;

polycarbonate resin;

polyphenylene oxide resin; and

biodegradable resins such as polylactic acid and the like.

As a matter of course, it is also allowable to use a blend of the above thermoplastic resins as the underlying resin so far as it does not impair the formability.

In the invention, among the above thermoplastic resins, it is desired to use an olefin resin and a polyester resin that have been used as materials of containers for containing viscous contents, and it is most desired to use the olefin resin.

That is, as compared to the polyester resin such as PET, the olefin resin has a low glass transition point (Tg) and shows a high molecular movement at room temperature. Therefore, part of the oily liquid 5 and part of the wax component forming the externally added protuberances 3 infiltrate into the interior of the olefin resin, and the externally added protuberances 3 are most desirably held by the underlying surface 1a maintaining stability.

Moreover, the olefin resin is highly flexible and has been used for producing squeeze-out containers (squeeze bottles) by the direct blow-forming method that will be described later. Therefore, use of the olefin resin is desirable even from the standpoint of applying the structure 1 of the present invention to the containers of this kind.

The formed body 1 may be of a single-layer structure of the thermoplastic resin as described above, or a laminate of the thermoplastic resin with a paper or a metal, or may be of a multi-layer structure of a combination of a plurality of thermoplastic resins.

The structure of the present invention exhibits excellent slipping property to viscous water-containing substances and sustains the slipping property. The structure, therefore, can be effectively applied to the use where it comes into contact with the water-containing substances and can be, specifically, used as containers for containing water-containing substances to enjoy the advantage of the present invention to a maximum degree.

Specifically, when the formed body 1 assumes the form of a container with its inner surface being formed of an olefin resin or a polyester resin, there can be employed a construction in which an oxygen-barrier layer or an oxygen-absorbing layer is laminated as an intermediate layer via a layer of a suitable adhesive resin and, besides, the same resin as the underlying resin (olefin resin or the polyester resin) forming the inner surface is laminated on the outer surface side thereof.

The oxygen-barrier layer in the multi-layer construction is formed by using an oxygen-barrier resin such as ethylene-vinyl alcohol copolymer or polyamide, and can be, further, blended with any other thermoplastic resins in addition to the oxygen-barrier resin so far as they do not impair the oxygen-barrier property.

Further, as described in JP-A-2002-240813, the oxygen-absorbing layer contains an oxidizing polymer and a transition metal catalyst. Due to the action of the transition metal catalyst, the oxidizing polymer is oxidized with oxygen thereby absorbing oxygen and shutting off the permeation of oxygen. The above oxidizing polymer and the transition metal catalyst have been closely described in the above JP-A-2002-240813. Therefore, though not described here in detail, representative examples of the oxidizing polymer include an olefin resin having tertiary carbon atoms (e.g., polypropylene, polybutene-1, or a copolymer thereof), a thermoplastic polyester or an aliphatic polyamide; a polyamide resin containing a xylylene group; and an ethylenically unsaturated group-containing polymer (e.g., polymer derived from a polyene such as butadiene). Further, representative examples of the transition metal catalyst include inorganic salts of transition metals such as iron, cobalt and nickel, and salts or complexes of organic acids.

The adhesive resins used for adhering the layers have been known. As the adhesive resins, for instance, there can be used an olefin resin graft-modified with a carboxylic acid such as maleic acid, itaconic acid, fumaric acid, or an anhydride thereof, amide or ester; an ethylene-acrylic acid copolymer; an ionically crosslinked olefin copolymer; and an ethylene-vinyl acetate copolymer.

The layers may have thicknesses that are suitably determined depending upon the properties required for the layers.

It is, further, allowable to form, as the inner layer, a layer of the reground resin obtained by blending a virgin resin such as olefin resin with a scrap resin such as burr that generates at the time of forming the formed body 1 of the multi-layer construction. Or it is also allowable to obtain a container of which the inner surface is formed by using the olefin resin or the polyester resin and of which the outer surface is formed by using the polyester resin or the olefin resin.

There is no particular limitation on the shape of the container which, therefore, may assume any shape depending on the material of the container, such as cup, bottle, bag (pouch), syringe, pot, tray and the like. The container can be stretch-formed or can be formed by any known method.

Fig. 2 shows a directly blow-formed bottle which is the most preferred embodiment of the formed body 1 used for forming the structure of the present invention.

In Fig. 2, the bottle (i.e., the formed body 1) generally designated at 10 includes a neck portion 11 having a screw thread, a body wall 15 continuous to the neck portion 11 via a shoulder portion 13, and a bottom wall 17 that is closing the lower end of the body wall 15. Protuberances 3 are externally added onto the inner surface (underlying surface 1a) of the bottle.

The bottle 10 is favorably used for containing viscous substances. Upon squeezing the body wall 15, the viscous substance contained therein can be discharged. Due to the improved slipping property to the content and sustenance thereof, the content can be quickly discharged and in all amounts so that the content can be all consumed.

<Externally added protuberances 3>

As described already, the externally added protuberances 3 are formed by being externally added onto the surface (underlying surface 1a) of the formed body 1, and are formed of a mixture of the wax component and the liquid 5.
The wax component used for forming the externally added protuberances 3 may be formed of various kinds of organic materials but is, desirably, a low molecular wax since it must have a good compatibility with the liquid 5.
As the synthetic wax, there can be exemplified olefin wax, paraffin wax, and microcrystalline wax; as the vegetable wax, there can be exemplified candelilla wax, carnauba wax, rice wax and Japan wax; as the animal wax, there can be exemplified bees wax and hydrous lanolin; and as the mineral wax, there can be exemplified montan wax, etc.
Among them, it is most desired to use vegetable waxes such as rice wax and carnauba wax since they can be used for foods without any limitation.

<Liquid 5>

The liquid 5, due to its compatibility, forms the externally added protuberances 3 together with the wax component on the surface of the formed body 1 and, due to its wettability, covers the surfaces of the externally added protuberances 3 and the underlying surface 1a' at the valley portions Y where no externally added protuberance 3 is formed and, further, due to its incompatibility, exhibits slipping property to the water-containing substances. Namely, the liquid 5 works as a lubricating agent.
The liquid 5 must be a nonvolatile liquid having a small vapor pressure under the atmospheric pressure or must be a high-boiling liquid having a boiling point of, for example, not lower than 200°C. This is because the liquid, if it is volatile, easily volatilizes and extinguishes with the passage of time.
Further, the liquid must be the high-boiling liquid as described above, must be highly wettable for the surface of the formed body 1 and must stay closely adhered to the surface of the formed body 1 to stably hold the film of the oily liquid. From these points of view, the liquid 5 must acquire an angle of contact (23°C) of not more than 45 degrees and, specifically, not more than 15 degrees with respect to the surface of the formed body 1 and must have a viscosity (25°C) of not more than 100 mPa·s. Namely, irrespective of a synthetic resin, a glass or a metal that is forming the surface of the formed body 1, the film of the oily liquid can be effectively held on the surface of the formed body 1 if the oily liquid that that is used satisfies the above-mentioned properties.
Further, from the standpoint of improving the slipping property to viscous water-containing substances, it is desired to use an oily liquid having a surface tension (23°C) lying in a range of 10 to 40 mN/m and, specifically, 16 to 35 mN/m. This is because, as the surface tension becomes greatly different from that of the water-containing substance for which the slipping property is to be exhibited, more increased lubricating effect can be exhibited.
As the oily liquid 5 that satisfies the conditions concerning the angle of contact, viscosity and surface tension, there can be typically exemplified liquid paraffin, synthetic paraffin, fluorine-contained liquid, fluorine-contained surfactant, silicone oil, fatty acid triglyceride and various vegetable oils. An edible oil is preferred particularly when the substances for which the slipping property is to be exhibited are foods (such as mayonnaise, ketchup and the like).
Concrete examples of the edible oil include soy bean oil, rape oil, olive oil, rice oil, corn oil, safflower oil, sesame oil, palm oil, castor oil, avocado oil, coconut oil, almond oil, walnut oil, hazel oil and salad oil. Not being limited to oily liquids, there can also be used aqueous liquids provided they exhibit properties of the present invention.
In the present invention, to form the mountain portions X inclusive of the externally added protuberances 3 and the valley portions Y among them, the liquid 5 is used, desirably, in an amount of 500 to 10,000 parts by mass and, specifically, 1,000 to 5,000 parts by mass per 100 parts by mass of the wax component. That is, if the liquid 5 is used in too large amounts, the externally added protuberances 3 become so soft as to be fluidized, and it becomes difficult to hold the externally added protuberances 3 on the surface of the formed body 1. If the liquid 5 is used in too small amounts, on the other hand, a suitable degree of softness can no longer be imparted to the externally added protuberances 3 causing, therefore, a decrease in the slipping property and in the sustenance thereof. Moreover, the underlying surface 1a' may no longer be covered with the liquid 5 in the valley portions Y.

<Forming the surface construction>

In the invention, to form the mountain portions X inclusive of the externally added protuberances 3 and the valley portions Y on the surface of the formed body 1, the liquid 5 and the wax component may be mixed together so as to satisfy the above-mentioned amounts to thereby prepare a coating solution in which the wax component is dispersed. The thus prepared coating solution may then be applied onto the surface of the formed body 1. Any known coating means can be employed depending on the shape of the surface of the formed body 1, such as spraying method, knife coating, roll coating or co-extrusion. Preferably, however, the spraying method is employed since it makes easy to adjust the amount of distribution of the externally added particles 3 by adjusting the spraying pressure and the like.

The externally added protuberances 3 can be, further, formed by adjusting the temperature of heating the coating solution. When it is attempted to apply the coating solution that is heated such that the wax component is partly dissolved and finely dispersed, there are formed semisolid or gel-like externally added protuberances 3 being cooled by the underlying surface (surface of the formed body 1) or by the external environment. The externally added protuberances 3 may be so formed as to create a predetermined difference h of elevation. Namely, the underlying layer 1a may be heated and may, thereafter, be cooled so as to form semisolid or gel-like externally added protuberances 3. They may be suitably selected depending upon the use or the properties of the coating solution.

Due to the wax component and the liquid 5 externally added as described above, the externally added protuberances 3 can be held on the underlying surface 1a; i.e., the externally added protuberances 3 are formed maintaining a given height.

The height of the externally added protuberances 3 thus formed is so set that a difference h of elevation between the mountain portions X (apex portions A) inclusive of the externally added protuberances 3 and the valley portions Y (upper surface of the liquid 5) is at last not less than 10 $\mu$m and, specifically, not less than 20 $\mu$m. Here, however, if the difference h of elevation is too large, the externally added protuberances 3 tend to be easily deformed and collapsed. It is, therefore, desired that the height of the externally added protuberances 3 (height from the underlying surface 1a) is, usually, not more than 100 $\mu$m.

The thickness of the liquid 5 is considerably small and, therefore, the height of the external protuberances 3 is nearly the same as the difference h of elevation between the mountain portions X and the valley portions Y.

In the observation of the surface by using a microscope, further, it is desired that a ratio of the mountain portions X formed by the externally added protuberances 3 as defined by the following formula:

$$F \ = \ F_1 / F_0$$

wherein $F_0$ is a measured area, and $F_1$ is the sum of the projected areas occupied by the mountain portions having projected areas of not less than 1000 $\mu m^2$ in the measured area $F_0$,

is in a range of 0.5 to 0.9 and, specifically, 0.5 to 0.8 so as to exhibit stable and sustaining slipping property. Further, the surfaces of the externally added protuberances 3 may have been formed to be more finely rugged.

The structure of the present invention formed on the surface of the formed body 1 exhibits excellent slipping property to the viscous water-containing substances and sustains the slipping property. Therefore, the structure can be preferably used as a container for containing a viscous water-containing substance having a viscosity (25°C) of not less than 100 mPa·s and, specifically, as a directly blow-formed container for containing viscous contents such as mayonnaise, ketchup, aqueous paste, honey, various sauces, mustard, dressing, jam, chocolate-syrup, cosmetic such as emulsion, liquid detergent, shampoo, rinse, etc.

Specifically, the structure 1 of the invention exhibits excellent slipping property even to emulsified products such as mayonnaise and the like, and is very highly useful in the field of packages.

EXAMPLES

The invention will now be described by way of the following Experimental Examples.

Described below are various kinds of properties, methods of measuring the properties, and resins used for forming the resin formed bodies (containers) employed in the following Examples.

1. Observing the surface shape of the structure. A test piece measuring 20 mm x 20 mm was cut out from the body portion of a multi-layer container (bottle) having a surface construction prepared by a method described later, the surface state of the inside of the test piece was observed by using a digital microscope (VHX-1000, manufactured by Keyence Co.), and the three-dimensional image thereof was measured (XY range: 1116.1 $\mu$m m 837 $\mu$m). From the obtained image, a maximum difference of elevation was found on the measured surface and was regarded to be a typical difference h of elevation between the mountain portions and valley portions.

Further, by using the Image-Pro Plus (Ver. 5.0.2.9, manufactured by Media Cybernetics, Inc.), projected areas of the mountain portions were found from the obtained image, and a distribution of mountain portions having projected areas of not less than 1000 $\mu m^2$ were analyzed.

2. Observing the slipping behavior.

The multi-layer container (bottle) having the surface construction prepared by the method described later was filled with 100 g of a content which was a mayonnaise-like food in a customary manner. The mouth portion of the bottle was heat-sealed with an aluminum foil and was sealed with a cap to obtain a filled bottle. The bottle filled with the content was tilted to observe the slipping behavior with the eye. The faster the motion of the content, the better the slipping property.

3. Testing the slipping of the content after stored.

The multi-layer container (bottle) having the surface construction prepared by the method described later was filled with 400 g of a content which was the mayonnaise-like food in a customary manner. The mouth portion of the bottle was heat-sealed with the aluminum foil and was sealed with the cap to obtain a filled bottle.

The obtained filled bottle was stored for periods of time and at temperatures shown in Table 1. Thereafter, the heat-sealing member was peeled off, and the bottle fitted with the cap was pushed at its body portion to squeeze out the content through the mouth portion of the bottle until it was not left any more. Next, the air was introduced into the bottle to restore its shape.

Next, the bottle was inverted (mouth portion down) and was stored for one hour. Thereafter, the body wall of the bottle was measured in regard to what extent the content has slipped down along the body wall of the bottle (to what extent the content has no longer been adhered to the body wall). The content adhesion ratio was calculated in compliance with the following formula.

$$\text{Content adhesion ratio (\%) = (surface area on which} \\ \text{the content adhered/surface area of the body} \\ \text{wall of the bottle) x 100}$$

From the content adhesion ratios calculated above, the slipping properties were evaluated on the following basis.

○: The content adhesion ratio is less than 10%.
Δ: The content adhesion ratio is not less than 10% but is less than 50%.
✕: The content adhesion ratio is not less than 50%.

The lower the content adhesion ratio, the better the content slipping property after the storage.

<Content>

An egg (50 g), 15 cc of vinegar and 2.5 cc of salt were mixed together and to which 150 cc of edible oil was, further, added to prepare a mayonnaise-like food for experiment. In Examples and Comparative Examples, the contents were prepared in required amounts and were used.

<Example 1>

There was provided a multi-layer directly blow-formed bottle having a multi-layer construction of the following layer constitution and a capacity of 400 g.

Inner layer: low-density polyethylene resin (LDPE)
Intermediate layer: ethylene-vinyl alcohol copolymer (EVOH)
Outer layer: low-density polyethylene resin (LDPE) Adhesive layers (among the inner layer, outer layer and intermediate layer): acid-modified polyolefin

Next, by using a homogenizer, a coating solution was prepared by partly dissolving and finely dispersing 5 g of carnauba wax (melting point: 80°C) in 100 g of an oily liquid (salad oil to which an intermediate-chain fatty acid was added, viscosity of 33 mPa·s (25°C)) at 70°C. By using an air sprayer, the coating solution was uniformly applied by a predetermined amount onto the inner surface of the bottle (container) while controlling the temperature of the coating solution.

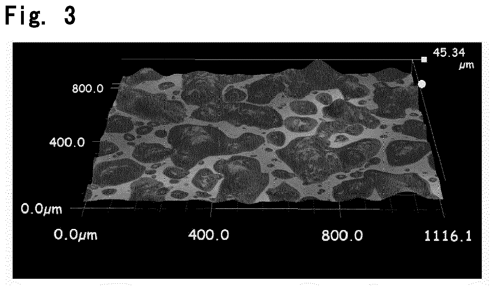

The thus prepared structure was observed for its surface shape of the structure and slipping behavior, and was tested for its slipping property to the content after stored. The results of observing the surface shape were as shown in Table 1. The results of observing the slipping behavior and the results of the content slipping test after stored were as shown in Table 2. Fig. 3 shows the three-dimensional image of the structure obtained from the observation of the surface shapes.

<Examples 2 to 5>

Bottles were prepared by applying the coating solution on to the inner surfaces of the bottles in the same manner as in Example 1 but changing the ratios of the oily liquid and the wax as shown in Table 2. The bottles were observed for their slipping behavior and were tested for their slipping property to the content after stored. The results were as shown in Table 2.

<Comparative Example 1>

A bottle was prepared by applying the oily liquid onto the inner surface of the bottle in the same manner as in Example 1 but using, as the coating solution, an oily liquid that contained no wax. The bottle was tested for its slipping behavior and was tested for its slipping property to the content after stored. The results were as shown in Table 2.

| Table 1 | | | | | | |
|---|---|---|---|---|---|---|
| | Ratio F of mountain portions | Typical difference h of elevation of mountain and valley portions | Distribution of mountain portions, number of mountains per (1116.1 $\mu$m $\times$ 837 $\mu$m) | | | |
| | | | Not less than 1,000 $\mu$m$^2$ but less than 5,000 $\mu$m$^2$ | Not less than 5,000 $\mu$m$^2$ but less than 10,000 $\mu$m$^2$ | Not less than 10,000 $\mu$m$^2$ but less than 50,000 $\mu$m$^2$ | Not less than 50,000 $\mu$m$^2$ |
| Example 1 | 0.678 | 45.34 $\mu$m | 14 | 4 | 6 | 6 |

| Table 2 | | | | | | |
|---|---|---|---|---|---|---|
| | Composition of coating solution (wt/wt) | | Testing slipping property to the content | | | |
| | Wax | Oily liquid | Slipping behavior | Evaluation with the passage of time | | |
| | | | | 23°C, 1 week | 40°C, 2 weeks | 40°C, 2 months |
| Example 1 | 5 | 100 | moves quickly | ○ | ○ | ○ |
| Example 2 | 3 | 100 | moves quickly | ○ | ○ | ○ |
| Example 3 | 7 | 100 | moves quickly | ○ | ○ | ○ |
| Example 4 | 1 | 100 | moves | ○ | ○ | ○ |
| Example 5 | 10 | 100 | moves | ○ | ○ | ○ |
| Comparative Example 1 | 0 | 100 | moves very quickly | ○ | Δ | × |

From Table 1 and Fig. 3, it will be learned that the structure of the present invention has externally added protuberances distributed on the surface of the formed body thereby forming mountain portions and valley portions on the surface thereof. From the observation of slipping behavior and the results of testing the content slipping property after stored of Table 2, further, it will be learned that in Examples 1 to 5 in which the externally added portions are formed by using a mixture of the wax component and the oily liquid, excellent properties are exhibited at high temperatures even after stored for extended periods of time though the slipping behavior is slightly inferior to that of Comparative Example 1 that uses no wax. It is, therefore, learned that the structure of the present invention is practically and very highly utilizable in the field of containers and packages where it is desired to sustain the slipping property for extended periods of time.

Description of Reference Numerals:

1: formed body
1a: underlying surface of the mountain portions X
1a': underlying surface of the valley portions
3: externally added protuberances
5: liquid
A: vertex
X: mountain portions
Y: valley portions

## Claims

1. A structure including a formed body formed in a predetermined shape and an externally added region formed on a surface of said formed body, wherein:

   said externally added region has externally added protuberances of a mixture of a wax component and a liquid formed on the surface of said formed body and, further, has a mountain/valley surface formed by the distribution of said externally added protuberances; and
   on said externally added region, the surfaces of said formed body are covered with said liquid at portions among the externally added protuberances.

2. The structure according to claim 1, wherein a difference h of elevation is at least not less than 10 $\mu$m between the mountain portion and the valley portion on the mountain/valley surface in said externally added region.

3. The structure according to claim 2, wherein in an observation of the surface by using a microscope, a ratio F of mountain portions defined by the following formula:

$$F = F_1/F_0$$

   wherein $F_0$ is a measured area, and $F_1$ is a sum of the projected areas occupied by the mountain portions having projected areas of not less than 1000 $\mu$m$^2$ in said measured area $F_0$,
   is 0.5 to 0.9.

4. The structure according to claim 1, wherein said wax component has a melting point of not lower than 50°C.

5. The structure according to claim 1, wherein said liquid is an oily liquid.

6. The structure according to claim 5, wherein said oily liquid acquires an angle of contact (23°C) of not more than 45 ° relative to the surface of said formed body and has a viscosity (25°C) of not more than 100 mPa·s.

7. The structure according to claim 1, wherein said externally added protuberances as well as the surfaces of said formed body among said externally added protuberances are coated with said liquid used for forming said externally added protuberances.

8. The structure according to claim 1, wherein on said externally added region, said liquid is present in an amount of 1,000 to 5,000 parts by mass per 100 parts by mass of said wax component.

9. The structure according to claim 1, wherein the surface of said formed body lying under said externally added region is formed of a synthetic resin or a glass.

10. The structure according to claim 1, wherein said formed body is a container, and said externally added region is forming an inner surface of the container to which a content contained therein comes in contact.

**11.** The structure according to claim 10, wherein said container is used for containing a fluid content that has a viscosity (25°C) of not less than 200 mPa·s.

Fig. 1

Fig. 2

Fig. 3

## INTERNATIONAL SEARCH REPORT

International application No.

PCT/JP2016/058740

| A. CLASSIFICATION OF SUBJECT MATTER |
|---|
| *B65D65/42*(2006.01)i, *B32B3/30*(2006.01)i, *B65D85/72*(2006.01)i, *C08J7/04* (2006.01)i |

According to International Patent Classification (IPC) or to both national classification and IPC

| B. FIELDS SEARCHED |
|---|

Minimum documentation searched (classification system followed by classification symbols)
B65D65/42, B32B3/30, B65D85/72, C08J7/04

Documentation searched other than minimum documentation to the extent that such documents are included in the fields searched

Jitsuyo Shinan Koho      1922–1996    Jitsuyo Shinan Toroku Koho    1996–2016
Kokai Jitsuyo Shinan Koho    1971–2016    Toroku Jitsuyo Shinan Koho    1994–2016

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | WO 2014/010534 A1 (Toyo Seikan Group Holdings, Ltd.), 16 January 2014 (16.01.2014), paragraphs [0020] to [0075]; fig. 1 to 3 & US 2015/0108032 A1 paragraphs [0032] to [0169]; fig. 1 to 3 & CN 104540747 A     & KR 10-2015-0034178 A | 1-11 |
| A | JP 5673870 B1 (Toyo Seikan Group Holdings, Ltd.), 18 February 2015 (18.02.2015), paragraphs [0020] to [0094]; fig. 1 to 6 & CN 105408103 A | 1-11 |

☒   Further documents are listed in the continuation of Box C.      ☐   See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 31 May 2016 (31.05.16) | 07 June 2016 (07.06.16) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (January 2015)

**INTERNATIONAL SEARCH REPORT**

| International application No. |
| --- |
| PCT/JP2016/058740 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | US 2015/0076030 A1  (LIQUIGLIDE INC.),<br>19 March 2015 (19.03.2015),<br>paragraphs [0041] to [0061]; fig. 1 to 2<br>(Family: none) | 1-11 |

Form PCT/ISA/210 (continuation of second sheet) (January 2015)

**REFERENCES CITED IN THE DESCRIPTION**

**Patent documents cited in the description**

- JP 2014091894 A
- JP 2014126877 A
- JP 5673870 B
- JP 2002240813 A